# EUROPEAN PATENT APPLICATION

(11) **EP 2 424 181 A1**
(43) Date of publication of application: **29.02.2012**
(21) Application number: 11275108.6
(22) Date of filing: 31.08.2011
(51) Int. Cl.: H04L 12/58, G06Q 10/00

(54) **Enhanced computing device and associated application for use therewith**

(30) Priority: 31.08.2010 GB 1014405
(71) Applicant: Vodafone IP Licensing Limited, The Connection Newbury Berkshire RG14 2FN (GB)
(72) Inventor: Papeschi, Franco, Newbury, Berkshire RG14 2FN (GB); Wilmes, Bettina, Newbury, Berkshire RG14 2FN (GB)
(74) Representative: Sneary, Adrian Bernard

(57) **Abstract**

For use in relation to a communication terminal, a method and associated arrangement for enhancing messages and calendar events created and sent from the communication terminal. The enhancement relates to the incorporation of dynamic information relating to the message/event content which is constantly updatable. Preferably the dynamic information also relates to a recipient of the message/event, so that it is personalised. The dynamic information may be provided by a widget embedded in the message/event which is in communicable relation with one or more remote servers.

## Description

### Field of Invention

The present invention relates to an application for use on a communications device particularly a mobile communications terminal. More particularly the present invention relates to an application for use on a communications device which is configured to manage the creation of a notification, such as a message and/or event invitation to be transmitted to one or more communications devices. The present invention also relates to a master server for use in managing the content of the notification.

### Background

Mobile telecommunications have become commonplace in the modem world as a principle form of communication. With this acceptance, mobile phones have developed into an important tool for users, developing from terminals whose main function was to make and receive calls, to multi-functional devices. For instance, communications terminals, such as mobile phones, PDAs, netbooks, laptops and the like are typically usable for additional purposes such as calendar and address book management and web browsing.

This increase in functionality however, has also resulted in an increased complexity, particularly in regard to its provision of information and ease of use for users.

Further, with the rapid advancement in the development of communications technology, users are becoming more and more demanding for computing terminals with even further enhanced functionalities.

There are therefore needs to further improve the mode of operation of communication terminals, as well as better manage the functionalities on such a terminal.

In general, there is a need to overcome or alleviate at least one of the problems of the prior art.

### Summary of the Invention

According to one aspect the present invention provides, on a communications device, a method of creating a message such as an event invitation, the message configured for transmission to one or more recipients, the method including: defining one or more characteristics of the message, such as a message subject, an event location and an event date; defining at least one recipient of the message; selecting a dynamic attribute to be associated with the message; and obtaining dynamic data using the dynamic attribute, such that the dynamic data is dependent upon at least one of the message characteristics.

According to another aspect the present invention provides on a communications device, a method of creating a message such as an event invitation, the message configured for transmission to one or more recipients, the method including: defining one or more characteristics of the message, such as a message subject, an event location, one or more message recipients and an event date; selecting a dynamic attribute to be associated with the message, such that the dynamic attribute is configured to obtain dynamic data which is dependent upon at least one of the message characteristics, and incorporating the dynamic data into the message upon the message being rendered.

Preferably, the act of rendering includes opening or displaying the message on the device.

The dynamic attribute is preferably an RSS feed or a widget embedded in the message which is in communicable relation with one or more remote servers.

Preferably the dynamic information also relates to a recipient of the message/event, so that it is personalised.

Other aspects of the invention are defined in the attached claims.

Advantageously these aspects of the invention enable different dynamic data sources to be integrated in order to provide relevant and up-to-date information related to messages. This has particular application to event invitations (e.g. meetings), as they refer to something that will happen in the future, so there is a gap in the information available when the event is created.

### Brief Description of the Drawings

Embodiments of the invention will now be described with reference to the accompanying Figures in which:
Figure 1 illustrates a graphical user interface for creating an event with dynamic information according to an embodiment of the invention;
Figure 2 illustrates graphical user interfaces for two different recipients of the event created in Figure 1; and
Figure 3 illustrates an arrangement for implementing the different embodiments of the invention.

### Detailed Description

According to a first embodiment of the invention, a system such as an application program is provided on a communications terminal which is configured to operate in conjunction with the normal processing of the communications device. The application may be implemented in hardware and/or software. The application may also be pre-stored on the communications device, or be downloadable thereto. The communications device may be any device capable of storing and processing an application program, including a portable computing device such as a mobile phone, PDA (personal digital assistant), netbook, laptop and the like.

The application is configured to enable the insertion of dynamic data into a message. The message may be any form of electronic communication including an event invitation, a calendar meeting request/invite and an SMS/MMS. The dynamic data is preferably enabled using a dynamic attribute such as a widget or RSS reader inserted into the message.

Therefore the dynamic data is preferably a live update and/or a feed (e.g. an RSS feed) from an external data source, and is chosen such that it relates to a characteristic of the message, particularly as determined from its subject matter. For example, where the message is an event invitation, examples of the dynamic data that may be integrated include a weather forecast for the event location, a traffic report for the region of the event location, current transport costs for travelling to the event location train/bus times for travelling to the event location and/or updates regarding artists appearing at the event. In other words, the dynamic data is constantly updated information, with the information typically received from another a remote server.

In view of the dynamic attribute being embedded or "nested" in the message, recipients of the message are able to see the most up-to-date version upon opening the message (i.e. the dynamic attribute will typically obtain the dynamic data upon the message being opened). Therefore, in view of the updatability of at least this part of the message's content, each time the user opens the message the data viewed may be different each time.

According to a further embodiment of the invention, the dynamic data integrated into the message is not only related to the subject matter of the message, but utilises a characteristic associated with each intended recipient of the message in order to personalise the dynamic data.

For instance, where the message is an event invitation at a particular location, the application may be configured to insert dynamic data relating to transport costs for travelling to the location, which are variable depending upon the recipient's place of departure and means of transport. To achieve this, the application is configured to determine relevant information, such as a home location of a recipient, which is then utilised in defining the dynamic data (e.g. transport costs from the recipient's home location to the event location).

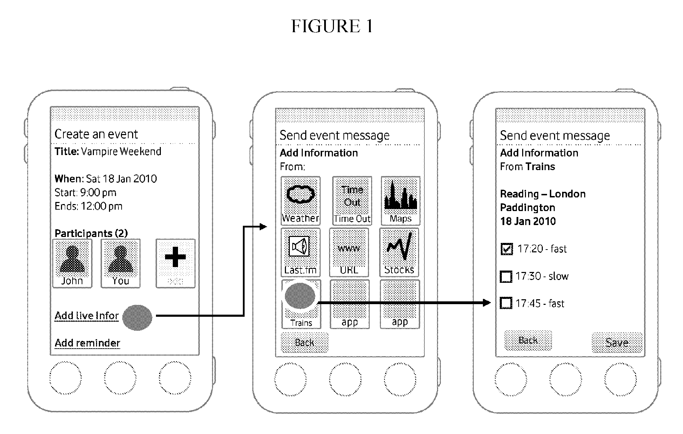

With reference to Figure 1, an example of this further embodiment of the invention is provided. The first communication terminal screen in Figure 1 shows a graphical user interface which enables a user to create an event. This interface may be associated with a calendar on the user's terminal, and also be configured to be compatible with corresponding calendar applications on other users' communication terminals so that the created events are able to be incorporated into the recipients' calendars. Alternatively, or in addition, the interface may be associated with messaging applications, such as an SMS, MMS or email messaging application.

In the Figure 1 example, with reference to the first screen image, the event being created is an invitation to attend a performance by the band "Vampire Weekend" on a date in the future, which in this example is Saturday 18 January 2010 from 9pm until midnight. The event creation interface includes an option to "add live information". By clicking on this option, a new screen is preferably brought up, as shown in the second screen image of Figure 1.

This second screen image includes a number of information sources from which to incorporate relevant information. The examples shown in Figure 1 are a weather forecast source, traffic source (typically linked to a maps source), a stock price source and a train scheduling source. These sources allow a user, when creating an email or calendar event, for example, to integrate live information updates from specific web pages or applications. As a more specific example, the "Time Out" source may be a source of entertainment and other events happening in a region and may provide updates/news on a selected event/theme or even community messages/updates, such as from people attending a specific event. Similarly, the "Last.fm" source may provide updates relating to a radio station or general news, or even updates from an event which the radio station is covering/broadcasting from.

In this example, the user selects the "trains" option which brings up the third illustrated screen. The third screen shows a number of different available trains from Reading to Paddington (London) on 18 January 2010, with the train options being a 17:20 fast train, a 17:30 slow train and a 17.45 fast train. It is to be appreciated that this train information is obtained from one or more third party sources which are dynamically acquired, such as through API (Application Programming Interface)/RSS (Really Simple Syndication) feeds.

In this regard, to obtain the up-to-date train information, once the user selects an application (e.g. the trains option), a search is performed on content accessible through the application, based on the text of the message/event.

For instance, the search may utilise the date and time of the event, the location of the event and the home location of each participant. This information may be obtained directly from the text of the message/event and also from information associated with the communication terminal, such as in a contacts database of the user.

Where certain required information is not directly derivable from the information accessible to the application, queries may be directed to the user before performing the search. For instance, in the Figure 1 example, the location of the Vampire Weekend performance may not be discernible to the application, and accordingly a query may need to be formulated to the user to obtain the information.

The third screen in Figure 1 is relevant to one or more of the participants who will be travelling from Reading, for example John. The screen also allows the user to select an appropriate train, and in Figure 1, the fast 17:20 train is selected. This feature may be utilised by the application so that updates regarding this particular train, such as delays and/or a cancellation of the train, may be incorporated into the event invitation/calendar entry when accessed in the future.

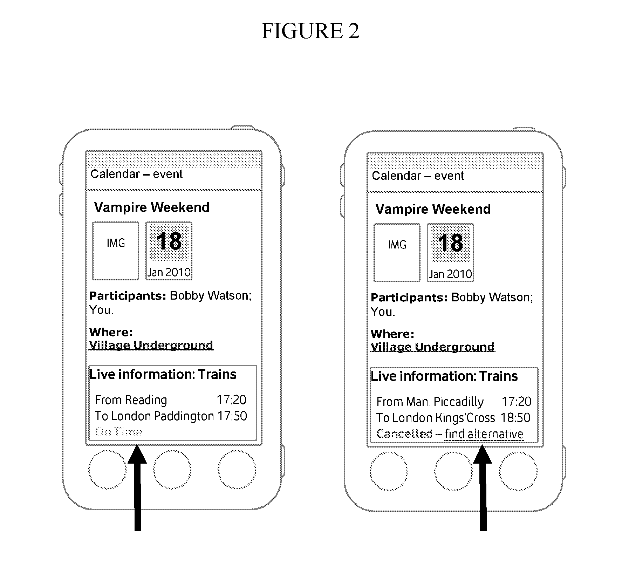

Once created, this event invitation has an embedded dynamic attribute (e.g a widget) configured to communicate with the external train scheduling source. The invitation can then be forwarded to the nominated participants, who upon receiving and opening the invitation will see different information according to the personalised dynamic data. This is shown in Figure 2.

In this regard the first user interface illustrated in Figure 2 shows the event in the user's calendar with live train information relating to travelling from Reading to London Paddington on the 17:20 train. The status of that train is also included on the user interface, which is listed as "on time". In contrast, the user interface for a second participant in the event is shown on the second screen, and this user has live train information relating to a train travelling from Manchester Piccadilly to London King's Cross. This status of this train is also included in the event information, where in this instance it is listed as "cancelled". For this scenario, the screen also includes the option for the user to "find an alternative", which may allow the user to search for alternative trains, or even alternative means of transport to London. Again it is to be appreciated that the information about the train updates depends on the feed provided by third party services, which are typically dynamically acquired through API/RSS feeds. To achieve this, the user device will include at least one appropriate API/RSS reader in order to intermittently obtain the updatable API/RSS feed(s) from a remote source. The API/RSS readers are typically implemented as widgets.

Therefore, in this embodiment of the invention, each participant will receive a personalised view of the event information, which is dependent upon one or more defined personal characteristics, such as their home location and perhaps preferred means of transport (e.g. if a user prefer to travel by coach, coach information could be provided for that user, possibly in addition to train information if a choice is favoured). Other characteristics that may be utilised in defining the dynamic data include the user's status such as determined from the availability of the user via their status updates and/or activity stream.

One suitable approach for implementing these embodiments of the invention will now be described. The application program on the communication device enables one or more dynamic attributes, such as widgets to be embedded into the message, with the functionality of the widgets depending upon the message content.

In a computing context, a "widget" is a single function application that performs a specific task or function. It is a portable, self-contained reusable module of functionality that can be executed on any compatible platform. In this regard widgets are generally coded in Javascript since this language has a wide acceptance. A widget could also be described as an executable file or applet, a module, snippet or plug-in. Many, but not all, widgets leverage web technologies to perform a specific task or function and typically display something to the user.

The widget performs the updating of the dynamic information. More specifically, at the back-end (i.e. the remote server) information is constantly being updated. This information is preferably not sent to the widget until required. That is, upon a user opening a message/event record, each widget is preferably activated and sends a request to the applicable remote server for current data applicable to the message/event. The remote server, in reply sends back the current up-to-date information for inclusion in the displayed message/event upon it being opened.

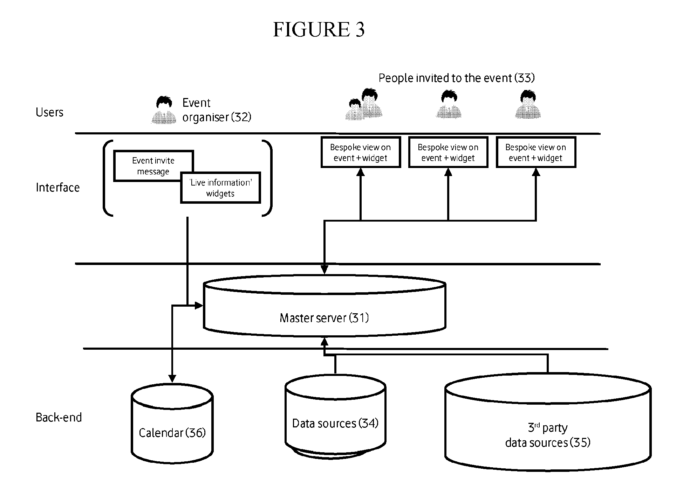

In a further embodiment of the invention, a master server is used to manage the events with dynamically generated data. As illustrated in Figure 3, a master server 31 is used in conjunction with a plurality of widgets associated with communication devices (i.e. of the event organiser 32 and one or more people invited to the event 33). The master server 31 servers as an interface between the widgets and the sources of the dynamic data, which may be data sources 34 directly under the master server's control and/or third party data sources 35. The master server may also have access to the event organiser's calendar 36 for retrieval and insertion of information relevant to the event being organised. In Figure 3, this calendar is illustrated as being at the back end, but it may equally be located on the event organiser's communication device.

In the arrangement of Figure 3, the master server 31 is configured to aggregate and synchronise the different data sources 34, 35 with the details of each event in the calendar 36 and forward the relevant information to the participants 31, 32. For instance, for a particular event, the master server 31 could interrogate the one or more data sources 34, 35 for up-to-date information relating to an event and personal to each of the participants, and transmit the appropriate information to each event participant.

In a still further embodiment of the invention, the widgets are configured to send notifications when a threshold is reached. In this way the widgets can be used to set up alerts. As an example, a user may set up a business sales meeting which is dependent upon a certain stock share price not exceeding a certain level. The meeting event invitation may therefore be created and a stock market widget inserted with the stock share price alert, so that participants know the meeting will go ahead unless they receive a notification from the widget regarding the share price.

As a further example, an event may be created relating to a surf weekend in Cornwall, but in view of the changeable weather in Cornwall, the creator (U1) of the event chooses to monitor the weather to determine if rain is forecast. To implement this, U1 adds a weather widget to the event and set a weather "threshold" to notify the participants if the weather is rainy or worse. The invitees, upon receiving the invite may simply accept the invitation, and perhaps even add further "thresholds". For instance, one invitee (U2) may consider it is probably best to cancel the event if the weather is bad, and accordingly sets an additional "threshold" alternative which proposes a poker event if the weather forecast is "rain" for three or more days immediately preceding the event. With these thresholds in place, the weather widget monitors the weather forecast for Cornwall. If a rain forecast is subsequently received for the scheduled event, the weather widget sends a notification to the creator of the event and the other participants. Additionally, if a rain forecast is received for at least three days immediately preceding the event, the widget sends a notification to U2 who created the additional threshold. This notification may additionally be sent to the other participants, if required. Upon receiving the notification from the widget, U2 may decide to send an invitation to cancel the "Surf in Cornwall" event and invites the attendees to a new Poker event.

In this way, the dynamic data obtainable using the widgets can be utilised to make decisions regarding the events, such as whether or not the event will proceed, and where the event is to be held (e.g. a picnic in the park could be changed to a home based BBQ, dependent upon the weather). The final decision may be made by the users themselves (i.e. upon receiving the dynamic information), or the decision may be programmed into the widget so that the widget automatically notifies the participants of an event cancellation or modification upon receiving the appropriate dynamic information.

As another illustrative example, where the dynamic attribute is implemented as an RSS reader, the dynamic data will comprise at least one dynamically updatable RSS feed relevant to the message. For instance, the RSS feed may be linked to a social networking group (e.g. Twitter), and conducting a search using a hashtag, such as #Glastonbury, allowing tracking of comments and discussions relating to the event.

The embodiments of the invention that have been described are to be taken as illustrative of the invention and not limitative.

For instance, rather than the widget interrogating the back-end server upon the message/event being opened, the widget may be configured to periodically interrogate the data source to determine any changes in the data. In a still further alternative, the back-end server may be configured to notify the widget of any changes when they occur.

## Claims

1. On a communications device, a method of creating a message such as an event invitation, the message configured for transmission to one or more recipients, the method including:
defining one or more characteristics of the message, an event location, one or more message recipients and an event date;
selecting a dynamic attribute to be associated with the message, such that the dynamic attribute is configured to obtain dynamic data which is dependent upon at least one of the message characteristics; and,
incorporating the dynamic data into the message upon the message being rendered.

2. The method of claim 1 wherein the step of rendering includes the steps of displaying or opening the message.

3. The method of claim 1 or 2 further including:
determining a characteristic of each of the at least one recipients; and
using the determined characteristic(s) to obtain the dynamic data, such that the dynamic data obtained is personalised for each participant.

4. The method of any one preceding claim wherein the dynamic attribute includes a widget and the method further includes using the widget to intermittently obtain the dynamic data from an updatable remote server.

5. The method of any one preceding claim wherein the dynamic attribute includes an RSS reader and the dynamic data is an RSS feed and the method further includes using the RSS reader to intermittently obtain the updatable RSS feed from a remote source.

6. The method of any one preceding claim wherein the dynamic attribute includes an API reader and the dynamic data is an API feed and the method further includes using the API reader to intermittently obtain the updatable API feed from a remote source.

7. An application program for use on a communication terminal, the application program for creating a message such as an event invitation and being configured to:
define one or more characteristics of the message, an event location, at least one recipient and an event date;
select a dynamic attribute to be associated with the message, such that the dynamic attribute is configured to obtain dynamic data which is dependent upon at least one of the message characteristics; and,
incorporate the dynamic data into the message upon the message being rendered.

8. The application program of claim 7 wherein rendering includes opening or displaying the message.

9. The application program of claim 7 or 8 further configured to:
determine a characteristic of each of the at least one recipients; and
use the determined characteristic(s) to obtain the dynamic data, such that the dynamic data obtained is personalised for each participant.

10. The application program of claim 7, 8 or 9 wherein the dynamic attribute associated with the message includes a widget for intermittently obtaining the dynamic data from an updatable remote server.

11. The application program of claim 7, 8, 9 or 10 wherein the dynamic attribute associated with the message includes an RSS reader, so that the dynamic data includes an RSS feed obtained from a remote source.

12. The application program of any one of claims 7 to 11 wherein the dynamic attribute associated with the message includes an API reader, so that the dynamic data includes an API feed obtained from a remote source.

13. A system for distributing information relating to an event, the system including a master server configured to manage dynamic data requests from a plurality of recipients of the event, such that the master server is configured to:
receive a request for current data relating to the event from a dynamic attribute associated with the message and a particular recipient;
query a data source for the current data by transmitting data dependent upon the event and the particular recipient; and
transmit the current data to the dynamic attribute associated with the particular recipient, such that the current data is dependent upon at least one event characteristic and at least one characteristic of the particular recipient.
